# FASCICULE DE BREVET EUROPEEN

(11) **EP 3 803 745 B1**
(45) Date de publication et mention de la délivrance du brevet: **16.11.2022**
(21) Numéro de dépôt: 19746146.0
(22) Date de dépôt: 06.06.2019
(51) Int. Cl.: G06Q 20/06, G06Q 20/22, G06Q 20/38

(54) **SYSTÈME TRANSACTIONNEL SÉCURISÉ DANS UNE ARCHITECTURE P2P**
SICHERES TRANSAKTIONSSYSTEM IN EINER P2P-ARCHITEKTUR
SECURE TRANSACTIONAL SYSTEM IN A P2P ARCHITECTURE

(30) Priorité: 06.06.2018 US 201862681187 P
(43) Date de publication de la demande: 14.04.2021
(73) Titulaire: Maim, Enrico, 92330 Sceaux (FR)
(72) Inventeur: Maim, Enrico, 92330 Sceaux (FR)
(74) Mandataire: Le Forestier, Eric
(86) Numéro de dépôt international: PCT/IB2019/054736
(87) Numéro de publication internationale: WO 2019/234686

(56) Documents cités:
- WO-A2-2017/122187
- Franco Pedro: "Understanding Bitcoin Cryptography, engineering, and economics", , 1 janvier 2015 (2015-01-01), pages 1-291, XP055467603, ISBN: 978-1-119-01915-2 Extrait de l'Internet: URL:http://porn.jules-aubert.info/cul/humb le_ebooks/Bitcoin_Blockchain_Cryptocurrenc y/understanding_bitcoin.pdf [extrait le 2018-04-16]
- ELI BEN SASSON ET AL: "Zerocash: Decentralized Anonymous Payments from Bitcoin", 2014 IEEE SYMPOSIUM ON SECURITY AND PRIVACY, 1 mai 2014 (2014-05-01), pages 459-474, XP055538553, DOI: 10.1109/SP.2014.36 ISBN: 978-1-4799-4686-0

## Description

### Domaine de l'invention

La présente invention concerne d'une façon générale les systèmes transactionnels sécurisés avec architecture de nœuds en P2P.

### Etat de la technique

Les demandes de brevets WO2016120826A2 et WO2017122187A2 au nom du demandeur, incorporés ici par référence, décrivent le modèle « Wallet Node » (ou « WN »), modèle logiciel (software) + matériel (hardware) visant à supprimer le besoin de tiers de confiance dans le cadre d'engagements contractuels (smart contracts) ou de transactions (telles que des transactions Bitcoin), en garantissant la bonne exécution de « contrats exécutables » (dits « Wallets Programs » ou « WP »).

Plus précisément, les Wallet Nodes représentent à la fois :
- un modèle de nœuds (nœuds d'un réseau) qui émettent ou reçoivent des messages « Wallet Message » (ou « WM »), chaque WM comprenant le haché du programme (#WP) qui a permis de le générer, et le programme WP étant censé s'exécuter sur le nœud destinataire pour générer à son tour des WM eux-mêmes comprenant le haché #WP, et ainsi de suite,
- et un modèle de hardware qui le garantisse (et sans altération).

La demande WO2016120826A2 susmentionnée donne l'exemple, en référence à la figure 7 dans ce dépôt, d'un message WM, représentant un paiement de 10 unités de compte (unités telles que des bitcoins), émis par un nœud WN1 à destination d'un nœud WN2, message comprenant le haché #WP du programme WP qui l'a généré, son destinataire devant exécuter le même WP à réception du message.

Le programme WP de cet exemple prévoit que :
- lors de la génération de WM par WN1, exactement 10 unités de compte sont retranchées dans la variable persistante « Solde » gérée par WN1 et que
- en réaction à la réception de WM par WN2, exactement 10 unités de compte sont ajoutées dans la variable persistante « Solde » gérée par WN2.

La combinaison du modèle au niveau logiciel (modèle selon lequel les WM comprennent le haché du WP) et au niveau matériel (modèle selon lequel les WN destinataires des WM émis exécutent forcément les WP respectifs spécifiés dans ces derniers) permet de garantir que les soldes respectifs sont maintenus corrects et que donc des unités de compte transférées lors d'un premier paiement ne seront pas de nouveau transférées ultérieurement (pas de double spend).

La demande WO2016120826A2 susmentionnée donne aussi un exemple « p2pInsurance » de paiements conditionnels sur événements (en référence à la figure 8 dans ce dépôt), montrant par-là la généralité du modèle qui ne se limite pas à des paiements mais permet de mettre en œuvre toutes sortes d'engagements (smart contracts).

La demande WO2017122187A2 décrit un composant « CMMU » (« Crypto Memory Management Unit ») mettant en œuvre le modèle des WN au niveau matériel (au sein d'un « Wallet Node Device » ou « SoC »). Le principe des CMMU est rappelé plus bas.

L'unité CMMU prend en charge le traitement d'unités de compte (nommés « Tags », qui peuvent par exemple être des bitcoins) de manière dissociée des WP, les unités de compte pouvant ainsi être transférées (d'un WN à un autre) par différents WP - plus précisément, la demande WO2017122187A2 décrit des transferts d'unités de compte mémorisés sous formes de transactions à la Bitcoin (modèle UTXO) qui sont ainsi indépendantes des WP qui les transfèrent. Concrètement, la demande WO2017122187A2 décrit, en référence à la Figure 4 de cette demande, que les tags ne sont pas des variables persistantes d'un certain programme WP particulier exécuté dans un WN, mais des unités de comptes utilisables par le WN quel que soit le WP qu'il exécute. Des unités de compte amenées sous la forme d'un tag par un WP appartiennent ainsi au WN, et peuvent être utilisées par un autre WP sur le même WN - ce sont des variables persistantes pour le WN pris globalement. Dans l'exemple présenté à la Figure 4 de WO2017122187A2, l'utilisateur de WN2 qui reçoit un message WM1 de paiement, à partir d'un nœud WN1, suite à une vente qu'il a effectué à ce dernier, exécute un Wallet Program de paiement WP1, et paye ensuite une prime d'assurance en exécutant un Wallet Program d'assurance WP2. Ainsi, 10 unités de compte sont transférées de WN1 à WN2, au moyen d'un message WM1 émis en exécutant WP1 (ce message comportant le haché #WP1) et ces 10 unités de compte sont payées par WN2 pour régler une prime d'assurance, en exécutant WP2 envoyant un message WM2 (comportant le haché #WP2) à un nœud WN3.

L'unité CMMU garantit que les unités tags transférées ne seront pas transférées à nouveau ultérieurement (pas de double spend). Les WN offrent ainsi le même avantage que Bitcoin (qui a été inventé justement pour résoudre le problème du double spend), mais ici sans besoin de Blockchain et sans l'intervention de mineurs, avec l'avantage des contrats exécutables (smart contracts) en plus. Les WN offrent ainsi une puissance équivalente à celle d'Ethereum, mais sans Blockchain et sans l'intervention de mineurs ou validateurs.

On notera aussi que l'unité CMMU inclut un mécanisme permettant de contraindre l'utilisation des tags par les programmes WP. Ainsi un tag peut être réservé pour usage par un WP ou des WP liés (cf. Figure 7 de WO2017122187A2), de manière à éviter que des unités de compte du tag ne puisse être dépensées par un WP qui n'est pas habilité à le faire. Ainsi un WP est capable d'indiquer au CMMU qu'un tag est réservé à son usage, et le CMMU affecte à ce tag un marquage indiquant cette réservation au niveau de la mémoire MEMORY. Ce marquage peut être levé à l'initiative du même programme, rendant ainsi le tag à nouveau utilisable par d'autres WP. Dans le cas d'une tentative, par un WP, de génération de transaction alimentée par un tag pour lequel ce WP n'est pas habilité, le CMMU interdit l'opération, et les unités de compte de ce tag ne pouvant donc pas être consommées (du fait qu'une telle transaction ne peut avoir lieu). Cette architecture permet aux WN de réserver des unités de compte matérialisées par des tags à certains types d'opérations destinées à être exécutées par les WP qui les ont respectivement réservées, et donc de mettre en œuvre des engagements sur la base d'unités de compte qui sont bloquées à cet effet, comme dans l'exemple « p2pInsurance » de paiements conditionnels sur événements susmentionné.

On connait par ailleurs les techniques de génération/vérification de manière succincte de preuve Zero-Knowledge-Proof (ZKP) d'exécutions de programmes, telles qu'offertes notamment par le système Aurora https://eprint.iacr.org/2018/828.pdf et la librairie logicielle « libiop » https://github.com/scipr-lab/libiop (incorporés ici par référence), où pour des millions d'éléments de calcul, le temps que prend la génération de la preuve est de quelques minutes, la taille de la preuve est de l'ordre de quelques dizaines de kilo-octets et sa vérification ne dure que quelques secondes - plus précisément la taille de la preuve croit de manière polylogarithmique et sa vérification croit de manière linéaire. On se référera dans la suite à l'exécution de programmes avec génération/vérification de preuve avec inputs privés/publics, par le terme « exécution en ZK-SNARK » ou encore « en mode avec preuve à connaissance nulle » (quelle que soit la méthode utilisée, sans que ce soit limitatif).

Les documents Franco Pedro: "Understanding Bitcoin Cryptography, engineering, and economics", 1 janvier 2015 (2015-01-01), pages 1-291, XP055467603 et Eli BEN SASSON ET AL: "Zerocash: Decentralized Anonymous Payments from Bitcoin", 2014 IEEE SYMPOSIUM ON SECURITY AND PRIVACY, 1 mai 2014 (2014-05-01), pages 459-474, XP055538553, DOi: 10.1109/SP.2014.36 ISBN: 978-1-4799-4686-0 décrivent des systèmes transactionnels sécurisés en P2P communiquant par messages, avec recours à un mode de preuve à connaissance nulle de l'éxécution d'un programme.

### Résumé de l'invention

La présente invention vise à ce que les WP puissent être exécutés non pas dans du matériel (hardware) spécialisé des WN, comme décrit dans les demandes précitées, mais sur des équipements de traitement de données classiques.

On propose à cet effet un système transactionnel sécurisé en P2P tel que défini dans la revendication 1.

Le processeur non sécurisé peut éventuellement être apte à générer ladite preuve prenant comme entrée privée au moins les données d'entrée et comme entrée publique au moins les données générées, l'unité CMMU étant apte à vérifier ladite preuve en prenant comme entrée publique au moins les données générées.

Dans une forme de réalisation, d'autres nœuds sont apte à exécuter les programmes de façon en soi non sécurisée, et chaque message reçu (WM1) contient une preuve à connaissance nulle (ZKP1) du fait que les données (datai) contenues dans ce message ont été générées par un programme correspondant au haché (#WP) contenu dans ledit message reçu, tandis que tout programme destiné à traiter un tel message comprend un sous-programme de vérification de la preuve contenue dans le message reçu, un sous-programme de traitement des données (data1) contenues dans le message reçu pour générer des données traitées (data2), et un sous-programme de génération d'une preuve à connaissance nulle (ZKP2) de l'exécution du programme correspondant effectivement au haché et générant les données traitées (data2).

Avantageusement, ledit sous-programme de génération d'une preuve à connaissance nulle reçoit comme entrée publique les données générées par le sous-programme de traitement.

Selon un autre aspect avantageux, le système comprend en outre un mécanisme à nœuds miroirs apte à répliquer les traitements par un même programme sur un message donné sur une pluralité de nœuds formant miroirs, et à vérifier la cohérence des messages de sorties générés par ces traitements répliqués.

Dans une application les programmes désignés par leur haché comprennent des instructions de transaction sur des unités de valeur.

Dans la présente invention, le modèle des WN au niveau logiciel est le même que celui des demandes WO2016120826A2 et WO2017122187A2, à ceci près que le WM peut maintenant comprendre la preuve ZKP de l'exécution qui la produite, les mêmes exemples donnés pouvant servir à illustrer les modes de réalisation que l'on va maintenant décrire.

### Brève description des dessins

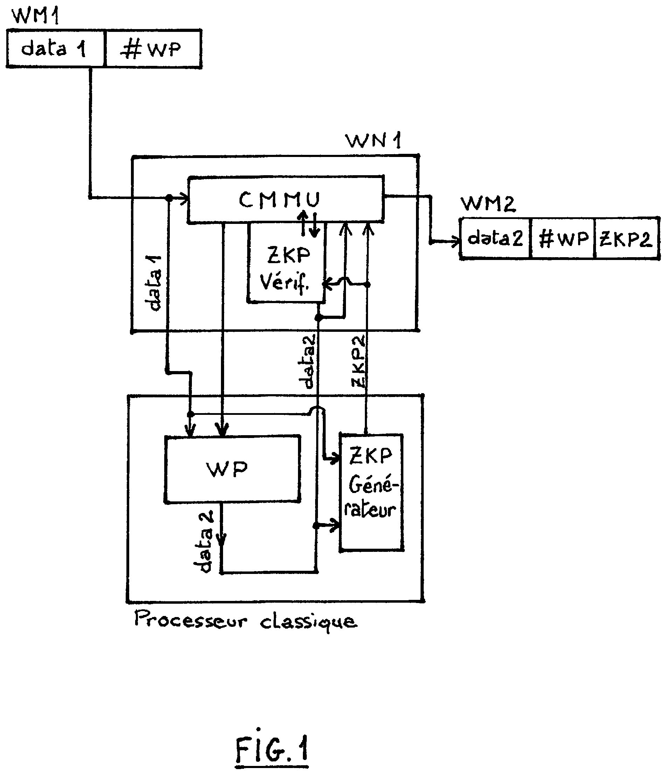

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels les Figures 1 à 3 sont des schéma-blocs fonctionnels illustrant trois modes de réalisation de l'invention.

### Description détaillée de formes de réalisation préférées

### Premier mode de réalisation

Dans un premier mode de réalisation, une unité CMMU gère les données (les variables persistantes) propres aux WN ainsi que les Tags susmentionnés, comme déjà décrit dans la demande WO2017122187A2, mais délègue l'exécution du WP en question à un ou plusieurs processeurs classiques (qui peuvent être externes au WN device) qui (par exécution en ZK-SNARK) génèrent la preuve ZKP des résultats produits par cette exécution, incluant la preuve de l'authenticité et de l'intégrité du WP ainsi exécuté (preuve qui est vérifiée par le CMMU) et permettent avantageusement au WN suivant (le WN recevant ce résultat dans un WM) de vérifier cette preuve ZKP.

Plus précisément et en référence à la Figure 1, suite à la réception par un Wallet Node WN1 d'un message entrant WM1 comprenant un contenu « data1 » (ainsi que le haché #WP, comme avant), son CMMU lance l'exécution du programme WP, en ZK-SNARK sur un processeur classique,
- produisant, le cas échéant, un (ou plusieurs) message(s) sortant(s) WM2 comprenant un (ou des) contenu(s respectifs) « data2 » (produit(s) en résultat de cette exécution) et
- générant la preuve ZKP2 du (resp. des) résultat(s) data2 et de l'authenticité de WP - c'est-à-dire la garantie que WP est bien le programme dont le haché #WP est celui spécifié dans le WM1 entrant (et bien entendu de son intégrité, c'est-à-dire la garantie que WP n'a pas été altéré), avec data1 en entrée privée (*private input*) et data2 en entrée publique (*public input*)*,*
- le CMMU vérifie ladite preuve ZKP2 en prenant data2 en *entrée publique* (et
- avantageusement, (chaque) WM2 inclut ladite preuveZKP2, et le destinataire de (chaque) WM2 (un WN qui peut lui-même lancer ledit programme WP sur un processeur classique pour exécution en ZK-SNARK) vérifie en premier cette preuve au moyen de data2 pris également en *entrée publique.*

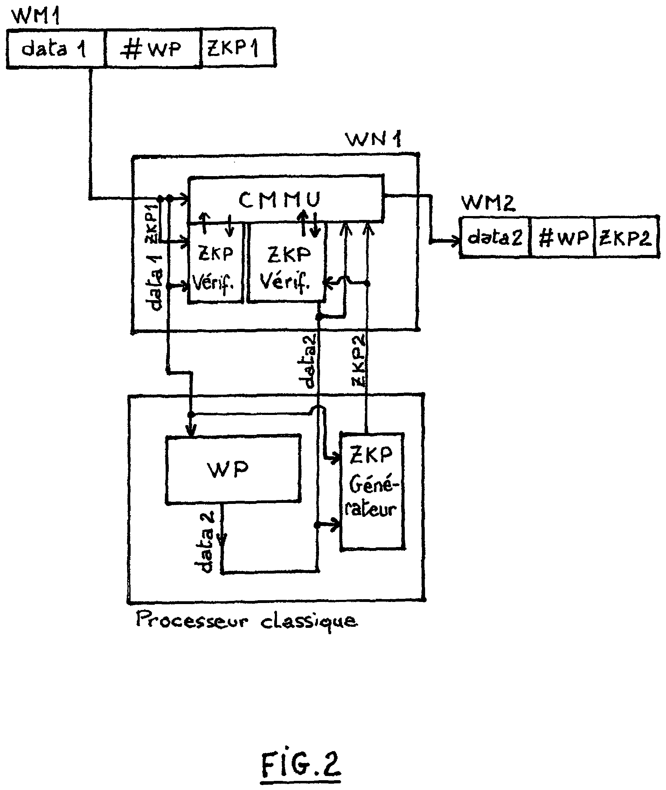

En référence maintenant à la Figure 2, dans le cas où le message WM1 a été produit par un Wallet Node du même type, il comprend lui-même la preuve ZKP1 du résultat d'exécution data1 et, à réception de WM1, WN1 vérifie en premier cette preuve ZKP1 reçue, l'entrée publique pour cette vérification étant data1.

Pour rappel, la demande WO2017122187A2 décrit le format des messages WM (déclenchant le lancement de programmes notés P1, P2, etc., leurs hachés étant notés #P1, #P2, etc.) comme suit :
- un format de message complet comprend un argument #spec contenant le haché d'une spécification des contraintes reliant #P1 et #P2, c'est-à-dire, restreignant l'ensemble des #P2 valides à la suite d'un #P1 : nonce1, §_{K2}(data+#P1+#P2), #spec, nonce2, K1, Sign_{K1}(nonce1, §_{K2}(data+#P1+#P2), spec, nonce2), sign_{K}(K1)

Dans une mise en œuvre, c ette spécification « spec » peut être l'ensemble des codes exécutables (#P1,#P2, etc.) valides. Dans une autre mise en œuvre, en référence à la Figure 11 de la demande WO2017122187A2, pour chaque code exécutable dont le hash est donné (#P1) est fourni dans cette spécification l'ensemble des hash des codes exécutables (#P2...) valides.

Dans le cas où, pour un message donné, il est requis que le code exécutable (dans son intégralité) qui doit être exécuté par le récepteur du message soit le même que celui exécuté par l'émetteur du message, c'est-à-dire que le même #P soit propagé d'un message entrant reçu à un (ou à chaque) message sortant généré, il est préférable que le format des messages soit le suivant et l'on utilise cette option particulière de format unifié dans la suite, sans que ce soit limitatif :
*nonce1, §K₂data*+#*P, nonce2, K1, Sign_{K1}(nonce1, §_{K2}data*+#*P, nonce2), sign_{K}(K1)*

Les WM de la présente invention peuvent inclure en plus les preuves ZKP comme suit :
*nonce1, §_{K2}data*+#*P*+*ZKP, nonce2, K1, Sign_{K1}(nonce1, §_{K2}data*+#*P*+*ZKP, nonce2), sign_{K}(K1)*

Pour rappel aussi, la demande WO2017122187A2 décrit qu'un dispositif WN (SoC) comprend une unité CMMU (Crypto Memory Management Unit) qui mémorise - ou qui est apte à dynamiquement régénérer (par technologie PUF, précédemment citée) - la clé secrète du WN (qui n'est accessible que par l'unité CMMU qui ne la dévoile jamais), et c'est par cette unité CMMU que sont effectués :
- le chiffrement du programme avant mémorisation,
- une allocation de place en mémoire (addr1..addr2 range) où stocker le programme ainsi chiffré, cette place allouée permettant aussi de stocker des variables persistantes liées à ce programme et assurant l'isolation des programmes les uns par rapport aux autres,
- la génération du haché du programme, et
- le décryptage pour exécution à la volée par au moins une unité processeur comprise dans le SoC,
- les autres traitements décrits plus bas dans la présente description.

La Figure 21 de la demande WO2017122187A2 présente schématiquement les étapes de réception par CMMU d'un message contenant un programme à charger en mémoire (MEMORY). A noter que la mémoire (MEMORY) peut être externe au SoC ou pas, et qu'elle comprend un espace réservé aux tags décrits plus haut. Les étapes numérotées représentent les étapes suivantes :
1) réception d'un message contenant un programme à charger en mémoire,
2) le programme à charger étant chiffré et le haché du programme avant chiffrement étant déterminé, réservation d'un espace en mémoire pouvant contenir ce programme chiffré et ses variables persistantes qui seront également chiffrées, et mémorisation du programme chiffré, ledit haché permettant par la suite de le retrouver via une table (PHT).

Avantageusement, l'unité CMMU effectue ladite mémorisation du programme chiffré bloc d'instructions par bloc d'instructions et fournit (audit processeur) un seul bloc d'instructions déchiffré à la fois (pour exécution par le processeur des instructions que le bloc comprend). Ainsi le procédé pour charger des programmes (codes exécutables) dans SoC comprend avantageusement les étapes suivantes. Sur réception par SoC d'un message comprenant P et #PP (sous forme chiffrée §K2P+#PP...), PP étant le programme de chargement de programme et P étant le contenu du code exécutable à charger, l'unité CMMU:
1. décrypte §K2P... et calcule le hash du programme à charger (#P) ;
2. crée une clé symétrique (PK) dérivée de {#P + la clé secrète du SoC};
3. chiffre les blocs d'instructions de ce code exécutable avec cette clé symétrique (§PKPi) ;
4. alloue de l'espace mémoire (addr1...addr2) dans la mémoire pour ces blocs §PKPi ainsi que pour les futures variables persistantes manipulées par ce programme, et y enregistre ces blocs §PKPi ;
5. insère des informations comprenant #P, addr1, addr2 dans une table PHT (Program Hash Table).

Lorsqu'un message, contenant des données d'entrée pour un certain programme à exécuter (P) et le haché (#P) de ce programme, est reçu par le SoC, son unité CMMU :
1. accède à partir du haché du programme #P reçu dans le message et via la table PHT, aux blocs du programme chiffré à exécuter §PKP stockés en mémoire dans l'espace qui lui est réservé (addr1..addr2) ;
2. décrypte à la volée les blocs d'instructions de P, et les transmet à l'unité processeur ;
3. l'unité processeur exécute à la volée les instructions décryptées sur les données d'entrées, les variables persistantes liées à P étant stockées en isolation dans addr1..addr2, et les messages générés incluant #P et étant signés par CMMU.

Ainsi, avant émission d'un message par le SoC, l'unité CMMU insère dans le message à émettre le haché (#P) du programme en cours d'exécution ainsi que la signature de ce haché par le CMMU au moyen de la clé secrète (ou insère ledit haché du programme dans le corps du message à émettre qu'elle signe avec la clé secrète), ce qui permet, dans le cas où #P = #P1 = #P2 (ou selon la description plus haut en référence à la Figure 7 de la demande WO2017122187A2, dans le cas où les programmes sont groupés selon une spécification) et si l'entité destinataire garantit aussi leur intégrité d'exécution, d'utiliser de tels programmes comme engagements exécutables (smart contract).

La Figure 22 de la demande WO2017122187A2 présente schématiquement les interactions que représentent ces étapes entre les différentes parties (PROCESSOR, CMMU, MEMORY) du système :
1) Réception par CMMU d'un message contenant des données d'entrée d'un programme à exécuter ainsi que le haché dudit programme ;
2) CMMU localise dans la table PHT, à partir dudit haché, ledit programme chiffré, le charge dans son cache et le décrypte (bloc par bloc) ;
3) CMMU transmet à la volée le (un bloc à la fois du) programme décrypté à PROCESSOR pour exécution ;
4) Le cas échéant, PROCESSOR requiert d'accéder à des variables persistantes (PSV et/ou tags) déjà créées ou en crée/les met à jour et demande de les stocker, ou en supprime, et
5) CMMU accède et décrypte / chiffre et mémorise lesdites variables persistantes ;
6) Le cas échéant, PROCESSOR prépare un message à émettre, et
7) CMMU y insère le haché dudit programme en exécution et sa signature au moyen la clé secrète et émet le message.

Avantageusement, le CMMU est apte à vérifier les intersections requises d'ensembles de nœuds miroirs décrits plus haut dans la demande WO2017122187A2 lors de la réception d'un WM et pour chaque transaction de transfert de tags reçue.

En référence à la Figure 22 de la demande WO2017122187A2, les WM peuvent être émis par un SoC (c'est-à-dire générés par l'exécution d'un programme WP) ou reçus en tant qu'input de l'utilisateur ou par un autre dispositif (messages « Quasi-WM »), et comprennent le haché #WP de ce programme dans les deux cas.

La Figure 23 de la demande WO2017122187A2 présente un message WM de transfert de tags, en entrée, qui véhicule une transaction (tx1), cette transaction provoquant dans la mémoire (MEMORY) au niveau des Tags, l'insertion des tags amenés par cette nouvelle transaction, chaque tag comprenant les données représentatives de la succession (graphe) des transactions à l'amont, comme déjà décrit, à chacune étant associé l'adresse du WN amont l'ayant généré et les adresses de ses WN miroirs. Avec ces informations, pour valider ou non le message, le CMMU vérifie l'intersection requise entre ses propres nœuds miroirs et lesdites adresses de WN miroirs, ainsi que le fait qu'au moins un (ou certains, selon les paramètres de configuration) sont des hard WN. Cette figure présente également un message WM de transfert de tags en sortie qui véhicule une transaction (tx2) générée par le CMMU sur instruction d'un WP, le CMMU neutralisant (rendant inconsommables à nouveau) les tags consommés par cette transaction générée (pour éviter un double-spend) et générant le ou les nouveaux tags qui en sont en output, des graphes respectifs des transactions à l'amont leur étant associés (à partir des graphes à leur amont).

Par ailleurs, le CMMU gère les simplifications de transactions (décrites dans la demande WO2017122187A2 à la section «Transactions Bitcoin off-chain »). Une telle simplification consiste à remplacer au moins deux transactions inter-WN antérieures qui ne sont pas encore insérées dans la blockchain, par une nouvelle (ou le moins possible de) transaction(s) de remplacement, le CMMU veillant à ce que le solde courant restant inchangé par ces remplacements (ce mécanisme est générique, les transactions de transfert de tags étant plus générales que les transactions Bitcoin).

La Figure 23 de la demande WO2017122187A2 montre également une requête https générée par l'unité CMMU qui prend en charge les handshakes et les opérations cryptographiques, laissant au terminal auquel il est couplé le rôle d'interface d'entrée/sortie (au niveau TCP) afin d'assurer l'intégrité des données de bout en bout (le site accédé étant de confiance).

Enfin, l'unité CMMU prend aussi en charge la gestion et la signature par le SoC des messages Non-WM (en sortie, comme présenté à la Figure 23 de la demande WO2017122187A2 et décrit plus haut à la section « WN émettant un message au monde extérieur »).

A la différence de l'invention décrite dans la demande WO2017122187A2, selon la présente invention l'exécution (en ZK-SNARK) du WP peut être effectuée dans un processeur classique qui peut être externe au SoC. Ainsi, en référence à la Figure 22 de la demande WO2017122187A2, le terme PROCESSOR désigne ici un tel processeur classique et l'étape 3 est remplacée par « CMMU transmet le programme décrypté à PROCESSOR pour exécution en ZK-SNARK », tandis que l'étape 5 est suivie des étapes « PROCESSOR transmet à CMMU la preuve ZKP de son exécution » et « CMMU vérifie la preuve ZKP reçue ».

A l'exception des différences/ajouts exposées jusqu'ici, l'ensemble du contenu de la demande WO2017122187A2 reste applicable.

Dans ce premier mode de réalisation, le CMMU peut être remplacé par une enclave SGX (de la société Intel) ou analogue, apte à gérer les variables persistantes des WN de manière sécurisée.

### Deuxième mode de réalisation

Dans un deuxième mode de réalisation, les identités des WN sont des adresses Bitcoin (ou analogue), les WN sont purement logiciels (le CMMU n'est pas nécessaire) et tout paiement est inséré dans la Blockchain Bitcoin (ou analogue). Ce mode de réalisation sous-entend que les signatures par un WN se font au moyen de la clé privée Bitcoin correspondant à l'adresse du WN. Les unités de compte « Tags » mentionnés plus haut sont ici des bitcoins (ou analogue). L'avantage qu'offrent ici les WN est qu'on ne se restreint pas à Bitcoin (qui se limite à des paiements) - on a au contraire toute la généralité des contrats exécutables (smart contracts), le protocole Bitcoin (ou analogue) étant utilisé pour les paiements et l'authenticité/intégrité des contrats exécutables (smart contracts) étant garanti par les WN - on a ainsi la puissance d'Ethereum sur le protocole Bitcoin (ou analogue).

Un WP est ici un programme, exécuté en ZK-SNARK dans un ordinateur associé à un WN donné (pour une adresse Bitcoin), s'activant automatiquement sur réception de messages WM destiné à ce WN, la preuve ZKP générée incluant la preuve de l'authenticité et l'intégrité du WP exécuté (vis-à-vis du #WP transmis dans les messages entrants) pour fournir des résultats (data2), cette preuve pouvant être incluse dans les messages WM2 générés et vérifiés par leurs WN destinataires.

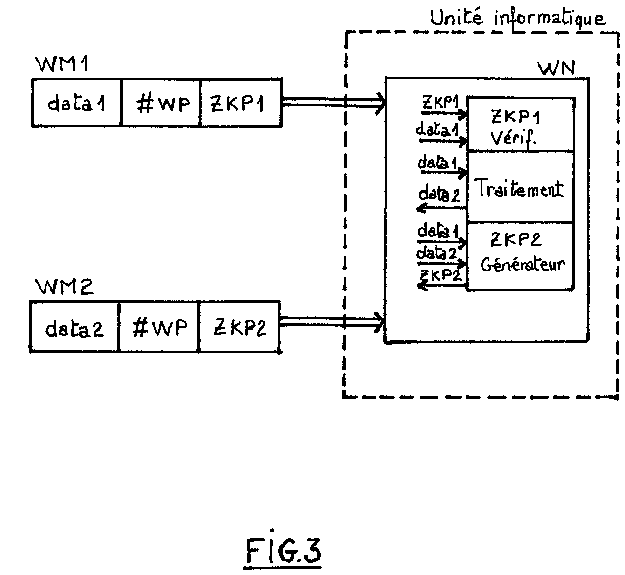

Autrement dit, et maintenant en référence à la Figure 3, à chaque réception, par un ordinateur associé à un Wallet Node donné, d'un message (WM1) comprenant les éléments spécifiés plus haut (i.e. data1, #WP et ZKP1), le WP correspondant à #WP dans cet ordinateur
- est exécuté en ZK-SNARK en vérifiant en premier la preuve ZKP1 inclus dans le message reçu, data1 étant pris comme entrée publique, et
- génère, le cas échéant, des messages (WM2) qui avantageusement incluent la preuve (ZKP2) de l'authenticité et l'intégrité du programme WP exécuté et des contenus data2 fournis (data1 étant cette fois-ci *l'input privé* et data2 *l'entrée publique*)*.*

Plus précisément, suite à la réception, par l'ordinateur associé à un Wallet Node WN1, d'un message entrant WM1 comprenant un contenu « data1 » et le haché #WP, le programme WP correspondant à #WP est exécuté en ZK-SNARK sur cet ordinateur pour
- produire, le cas échéant, un (ou plusieurs) message(s) sortant(s) WM2 comprenant un (ou des) contenu(s respectifs) « data2 » (produit(s) en résultat de cette exécution) et
- générer la preuve (ZKP2) dudit (resp. desdits) résultat(s) data2 - data1 étant l'input privé et data2 étant l'entrée publique - et de l'authenticité de WP - c'est-à-dire la garantie que WP est bien le programme dont le haché #WP est celui spécifié dans le WM entrant (et bien entendu de son intégrité, c'est-à-dire la garantie que WP n'a pas été altéré),
- (chaque) WM2 pouvant inclure ladite preuve, et le destinataire de (chaque) WM2 (qui est ici un programme WP en ZK-SNARK sur un processeur classique qui se déclenche à chaque message WM reçu pour le WN destinataire) pouvant vérifier ZKP2 au moyen de data2 pris en *entrée publique,*
- ici encore, dans la mesure où WM1 a été produit par un Wallet Node du même type, avantageusement il comprend lui-même la preuve (ZKP1) du résultat d'exécution data1 et, à réception de WM1, WN1 vérifie en premier ZKP1, *l'entrée publique* pour cette vérification étant data1.

Bien évidemment, ZKP2 peut être transmis au WN émetteur de WM1 (sous la forme d'un message WM2) et, les paiements Bitcoin pouvant être rendus conditionnels (cf. https://en.bitcoin.it/wiki/Contract), la vérification de ZKP2 peut être une condition à la validité, le cas échéant, d'une transaction Bitcoin véhiculée par WM1.

Ce deuxième mode de réalisation trouve pleinement son sens lorsque les WN sont rendus redondants au moyen de WN Miroirs (décrits dans la demande WO2017122187A2), comme on va maintenant le rappeler ci-dessous pour le troisième mode de réalisation. En effet, les WN Miroirs se contrôlent et se valident entre eux, garantissant ainsi la bonne exécution des WP spécifiés dans les messages WM entrants. Le deuxième mode de réalisation décrit jusqu'ici est ici entendu comme étant mis en œuvre avec des WN Miroirs, comme pour le troisième mode de réalisation (voir ci-dessous) mais avec des clés privée/publique de type Bitcoin.

### Troisième mode de réalisation

Dans un troisième mode de réalisation, les propriétaires des WN peuvent créer une paire de clés cryptographiques (clés privée/publique),
- l'adresse du WN peut être dérivée de la clé publique de cette paire, et
- un WP est, comme pour le deuxième mode de réalisation, un programme exécuté en ZK-SNARK dans un ordinateur associé à un WN donné (à ladite adresse), s'activant automatiquement sur réception de messages WM destiné à ce WN, la preuve ZKP générée incluant la preuve de l'authenticité et de l'intégrité du WP exécuté (vis-à-vis du #WP transmis dans les messages entrants) pour fournir des résultats (data2), cette preuve pouvant être incluse dans les messages WP2 générés et vérifiés par leurs WN destinataires.

Ici encore, à chaque réception par un ordinateur associé à un Wallet Node donné d'un message (WM1) comprenant les éléments spécifiés plus haut (i.e. data1, #WP et ZKP1), le WP correspondant à #WP dans cet ordinateur
- est exécuté en ZK-SNARK en vérifiant en premier lieu la preuve ZKP1 inclus dans le message reçu, data1 étant pris comme entrée publique, et
- génère, le cas échéant, des messages (WM2) qui avantageusement incluent la preuve (ZKP2) de l'authenticité et l'intégrité du programme WP exécuté et des contenus data2 fournis.

Plus précisément, comme dans le deuxième mode de réalisation, suite à la réception, par l'ordinateur associé à un Wallet Node WN1, d'un message entrant WM1 comprenant un contenu « data1 » et le haché #WP, le programme WP correspondant à #WP est exécuté en ZK-SNARK sur cet ordinateur pour :
- produire, le cas échéant, un (ou plusieurs) message(s) sortant(s) WM2 comprenant un (des) contenu(s) respectif(s) « data2 » (produit(s) en résultat de cette exécution), et
- générer la preuve ZKP dudit (resp. desdits) résultat(s) data2 et de l'authenticité de WP - c'est-à-dire la garantie que WP est bien le programme dont le haché #WP est celui spécifié dans le WM entrant (et bien entendu de son intégrité, c'est-à-dire la garantie que WP n'a pas été altéré),
- (chaque) WM2 pouvant inclure ladite preuve, et le destinataire de (chaque) WM2 (qui est ici un programme WP en ZK-SNARK sur un processeur classique qui se déclenche à chaque message WM reçu pour le WN destinataire) pouvant vérifier cette preuve au moyen de data2 pris en *entrée publique,* et
- dans la mesure où WM1 avait été produit par un Wallet Node du même type, avantageusement il comprend lui-même la preuve (ZKP1) du résultat d'exécution data1 et, à réception de WM1, WN1 vérifie ZKP1, *l'entrée publique* pour cette vérification étant data1.

Ce mode de réalisation est particulièrement bien adapté à des engagements contractuels locaux ou à des transactions locales, c'est-à-dire dans un réseau de nœuds fortement interconnectés, surtout lorsqu'au moins certains des WN d'un tel réseau est un « hard WN » (WN sécurisé au niveau du matériel) au sens des demandes WO2016120826A2 ou WO2017122187A2 ou encore au sens du premier mode de réalisation de la présente invention (au niveau du CMMU), comme on l'explique plus loin.

L'intégrité et l'authenticité des WP est assuré par la redondance d'exécution qu'offrent les WN Miroirs décrits dans la demande WO2017122187A2.

Pour rappel, cette redondance est créée pour chaque nœud avec des « nœuds miroirs » dans lesquels les données sont tenues synchronisées et dont certains effectuent les traitements en miroir, pour en même temps :
- pallier la « non-responsiveness » et
- mitiger le risque de violation (« tampering »).

Dans ce mode de réalisation (cf. WO2017122187A2), un « nœud » (Wallet Node) est un nœud virtuel (noté VWNx pour « virtual wallet node » de l'utilisateur x), matérialisé par une pluralité de nœuds miroirs comprenant :
- un nœud réel RWN (correspondant audit nœud virtuel) et
- un ensemble de nœuds contresignataires CWN.

Dans ce mode de réalisation, deux WN ne peuvent être liés par des contrats exécutables (WP) s'exécutant sur leurs nœuds respectifs, que seulement :
- s'ils sont associés chacun à un nombre supérieur à un premier seuil donné de nœuds miroirs communs ayant des « poids de connexion » (vis-à-vis de chacun de ces deux nœuds) qui soient supérieurs à un deuxième seuil (seuils déterminés selon des paramètres de configuration) et
- lorsque deux nœuds interagissent par exécution d'un WP, un WM envoyé de l'un à l'autre n'est valide que si au moins 10% (ou autre pourcentage aussi déterminé selon des paramètres de configuration) de nœuds miroirs communs ont exécuté ce contrat à l'identique ("en miroir") et ont émis un WM identique à destination de l'autre nœud.

Les « poids de connexion » sont décrits en détail dans la demande WO2017122187A2.

En d'autres termes, un nœud destinataire d'un WM ne valide ce message que si les ensembles respectifs de nœuds miroirs des nœuds émetteur et destinataire ont une intersection dont le nombre d'éléments est supérieur à un premier seuil donné et si le nœud destinataire a reçu ce même WM (en redondance) de la part d'au moins une fraction donnée (correspondant à un second seuil) desdits nœuds miroirs appartenant à cette intersection.

Par exemple, le WN réel du nœud Bob ne va considérer comme valide un message WM envoyé par le WN réel du nœud Alice que s'il reçoit aussi ce message émis (au nom du nœud Alice) de la part d'au moins 10% de leurs nœuds miroirs en commun.

Chaque nœud exécutant des Wallet Programs synchronise ses données (à savoir: les variables persistantes de ses Wallet Programs, ainsi que ses Tags, sur l'ensemble de ses nœuds miroirs, cet ensemble incluant l'union de tous les ensembles respectifs de nœuds miroirs qui sont en commun avec les nœuds avec lesquels ledit chaque nœud a un Wallet Program actif.

Ces synchronisations de données s'effectuent :
- en partie par envoi de WM qui déclenchent la mise à jour des données (variables persistantes des WP et tags) par des (mêmes) WP qui s'exécutent sur les nœuds receveurs et,
- pour les nœuds qui ne les reçoivent pas, les données sont synchronisées directement par des WM de notification de mise-à-jour de données.

Dans la présente invention, les nœuds miroirs synchronisent également (et se valident mutuellement) les preuves ZKP qu'ils reçoivent ou génèrent.

Par ailleurs, chaque nœud synchronise la liste de ses nœuds miroirs avec les nœuds avec lesquels il a un poids de connexion supérieur à un seuil, et lesdites synchronisations de données s'y effectuent par rapport à ces listes de nœuds miroirs. La synchronisation des listes s'effectue par des WM correspondants.

La Figure 3a de la demande WO2017122187A2 illustre la propagation d'un WM à partir d'un VWN1 donné vers un VWN2 destinataire.

Les nœuds miroirs RWN1, CWN1 mémorisent chacun la liste L2 des nœuds miroirs de VWN2 afin de pouvoir aiguiller le WM de contenu identique pour tous les nœuds miroir d'émission et les nœuds miroir de destination.

La Figure 3b de la demande WO2017122187A2 décrit de manière plus fine les envois de messages entre nœuds miroirs. Elle montre deux parmi les ensembles de nœuds contresignataires en commun, CWN_{AB} entre les nœuds d'Alice et Bob d'une part, et CWN_{BC} entre les nœuds de Bob et Carl d'autre part, l'union de ces deux ensembles (+ le nœud réel de Bob RWN_{B}) étant l'ensemble des nœuds miroirs du nœud de Bob qui sont synchronisés suite à n'importe quel message WM envoyé au nœud de Bob.

Ainsi, les nœuds d'Alice et Carl connaissent chacun non seulement leurs nœuds miroirs respectifs en commun avec le nœud de Bob, mais l'ensemble entier de nœuds miroirs du nœud Bob (grâce à la synchronisation de liste de nœuds miroirs évoqué plus haut).

La Figure 3b de la demande WO2017122187A2 montre aussi un WM généré par le nœud d'Alice suite à une interaction avec l'utilisateur (Alice), WM qui doit être envoyé au nœud de Bob. En premier, un message d'annonce (noté PWM pour « pre-wallet-message ») du message WM est envoyé par le nœud réel d'Alice RWN_{A} aux nœuds miroirs d'Alice CWN_{AB} qui sont en commun avec le nœud de Bob (un seul PWM étant illustré pour ne pas alourdir la figure), et les autres nœuds CWN_{XA} d'Alice reçoivent un message de synchronisation de données (noté DSM pour « data sync message »). Ensuite, le nœud réel d'Alice RWN_{A}, ainsi que chacun desdits nœuds contresignataires CWN_{AB} en commun avec le nœud de Bob, envoient le message WM en question au nœud de Bob, c'est-à-dire au nœud réel de Bob RWN_{B} et aux nœuds contresignataires du nœud de Bob (seule une partie de ces messages WM étant illustré pour ne pas alourdir la figure).

La Figure 3c de la demande WO2017122187A2 montre une phase de tentative de synchronisation de l'ensemble des nœuds miroirs (RWN_{B}, CWN_{AB}, CWN_{BC}) de Bob via des messages de type DSM, dans une situation où le nœud réel RWN_{B} est non responsif pour une raison ou une autre.

La Figure 3d de la demande WO2017122187A2 montre enfin un message WM' envoyé par le nœud VWN_{B} au nœud de Carl VWNc, message généré non pas suite à une interaction du nœud réel de Bob avec son utilisateur (Bob), mais suite audit message WM reçu du nœud d'Alice (généré par les instructions du WP exécuté). Dans ce cas, les nœuds miroirs qui ont effectivement reçu ce message du nœud d'Alice sont aptes à générer ledit message au nœud de Carl (par l'exécution de ce WP). La Figure 3d montre toutefois que le nœud réel de Bob est non-responsif et n'émet donc pas le message WM' (ce qui est représenté par un « ! » sur la figure), et que malgré cela, les autres nœuds miroirs du nœud de Bob envoient ce message au nœud de Carl VWNc (ce qui résout le problème de non-responsiveness).

Enfin, de nouveau, comme le message WM' est émis (par le nœud de Bob) non pas suite à une interaction avec l'utilisateur mais par l'exécution d'un smart contrat WP (sur ce nœud de Bob) en réaction à un message WM (reçu du nœud d'Alice), chacun des nœuds miroirs de VWNc qui reçoivent WM' va requérir la réception d'un message identique de la part de 10 % (ou autre pourcentage déterminé selon des paramètres de configuration) de nœuds miroirs CWN_{BC} en commun avec ce nœud (de Bob). Carl peut ainsi compter sur le fait que ledit message a bien été généré, et bien été généré par le smart contract WP en question qui n'a pas été altéré (on résout ainsi le problème de garantie d'engagements).

La demande WO2017122187A2 décrit en référence à sa Figure 6 un procédé d'utilisation des nœuds miroirs pour mitiger le risque de double-spending dans une succession de WM de transfert de tags, ce procédé permettant notamment de mettre en œuvre des transactions Bitcoin off-chain (l'utilisation de la blockchain devenant facultative). Cette Figure montre un message noté "WM_{CY / tgx}" envoyé par le nœud de Carl à un nœud Y (dont seuls des nœuds contresignataires "CWN_{CY}" en commun avec le nœud de Carl sont dans la figure). Ce message WM_{CY / tgx} transmet une transaction dont des transactions prédécesseurs (dans la chaîne "tgx" de successions de tags) étaient auparavant transmis par les messages WM_{XA / tgx}, WM_{AB / tgx} et WM_{BC / tgx}. Le but de la figure est de montrer que le nœud de Carl s'assure d'avoir un ou un certain nombre de nœuds miroirs en commun dont un est (ou certains sont) hard WN, avec tous les nœuds à l'amont, dont ici avec le nœud d'Alice (ceci est indiqué dans la figure ainsi :"CWN_{CY} = CWN_{XA}").

Rappelons qu'une transaction Bitcoin revient à transférer des BTC, en signant (avec une clé privée) au moins un output d'une transaction précédente qui les alloue, à au moins un nouveau propriétaire dont l'adresse Bitcoin est dérivée de sa clé publique. On considère ici le cas où la clé privée secrète d'une WN est une clé privée correspondant à une adresse Bitcoin (c'est-à-dire que le WN génère une adresse Bitcoin à partir de sa clé privée secrète). Un WN est ainsi apte à générer une transaction Bitcoin dont l'input (ou un des ses inputs) est connecté à un output (qui lui est destiné) d'une transaction amont (auquel, par exemple, l'utilisateur dudit WN a pu accéder du fait qu'elle est publiée dans la blockchain et qui l'a entrée audit WN en input dans son terminal), et (facultativement) à l'annoncer (broadcast) pour qu'elle soit insérée dans la blockchain. On comprend par là qu'il s'agit d'une transaction Bitcoin réelle et bien formée qui est générée par ledit WN ; néanmoins dans la demande WO2017122187A2, la section "Transactions Bitcoin off-chain" explique les avantages de ne pas l'y insérer.

Des BTC dépensés par un WN peuvent provenir d'une succession de transactions off-chain, formant un graphe et transférant des BTC d'un ou plusieurs nœuds à un ou plusieurs autres nœuds, et l'on veut mitiger le risque d'un double-spend sur l'un quelconque de ces nœuds générant ces transactions. Ceci est obtenu par la condition supplémentaire suivante (qui s'ajoute aux conditions spécifiées plus haut concernant les nœuds miroirs des nœuds émetteur et destinataire d'un WM) : Pour qu'un WM transférant un tag donné (par exemple 0.5 BTC) soit validé par son nœud destinataire, l'ensemble des nœuds miroirs du nœud destinataire doit avoir une intersection, dont le nombre d'éléments est supérieur à un seuil donné, avec l'ensemble des nœuds miroirs de chacun des nœuds du graphe amont (de transactions de transfert de tags) d'où provient ce tag, et au moins l'un ou un d'entre eux doit (ou certain nombre d'entre eux doivent) être hard WN. La mise en œuvre de l'exécution du procédé par un WN inclut ainsi la traversée, en parcourant de l'aval vers l'amont, du graphe des WM véhiculant des transactions de transfert de tags et de vérifier ladite condition d'intersection de nœuds miroirs.

Avantageusement, chaque tag inclut l'information du graphe des transactions de transfert de tags à l'amont, chacune indiquant l'adresse du WN l'ayant généré (ces WN sont appelées "WN amont"), ce qui permet, à un WN destinataire d'un WM de transfert de tag, de vérifier directement si au moins un miroir (ou un certain nombre) de tous les nœuds amont figurent dans son entourage, fait partie de ses propres nœuds miroirs et est un hard WN, et pour chaque WN amont qui n'est pas dans ce cas si le poids de connexion d'un de ses miroirs qui est un hard WN lui permettrait d'en faire partie (après échanges éventuels de nouvelles connexions avec des nœuds de son entourage). Ainsi, plus précisément, à chaque tag sont associés tous les tags amont (c'est-à-dire figurant dans le graphe amont, dans toutes les chaines de successions de transactions de transfert de tags menant au tag en question), avec l'adresse du nœud propriétaire qui l'a généré et avec, le cas échéant, l'adresse de chacun de ses propriétaires ultérieurs (OWN, cf. WO2016120826A2), ainsi que les adresses de leurs nœuds miroirs, ce qui permet à chaque nœud destinataire d'un WM transmettant une transaction de transfert de tags de vérifier directement l'intersection requise entre ses propres nœuds miroirs et lesdites adresses de nœuds miroirs de chacun de ces propriétaires, ainsi que le fait qu'au moins un (ou certains, selon les paramètres de configuration) sont des hard WN, et une recherche de nœuds ayant de forts poids de connexion est si besoin lancé afin de s'associer de nouveaux nœuds miroirs.

L'ensemble du texte de la demande WO2017122187A2 est applicable au troisième mode de la présente invention, sauf les différences/ajouts exposés.

Un même modèle de WN au niveau logiciel étant partagé entre eux, des WN des premier, deuxième et troisième modes de réalisation de la présente invention peuvent envoyer/recevoir des WM entre eux, de manière hétérogène, dans un même réseau de WN. Même des WN selon les demandes WO2016120826A2 et WO2017122187A2 peuvent envoyer des messages dans un tel réseau hétérogène, dans la mesure où la preuve ZKP de l'intégrité/authenticité de leur exécution n'est pas à vérifier (puisque c'est le matériel qui le garantit) - ainsi, les WN selon la présente invention n'ont pas à vérifier de preuve ZKP dans les WM entrants selon les demandes WO2016120826A2 ou WO2017122187A2, ou plus généralement dans des WM où ladite preuve ZKP n'est pas fournie.

Bien entendu, la présente invention n'est pas limitée aux formes de réalisation décrites, mais l'homme du métier saura y apporter de nombreuses variantes et modifications à la lumière de ses connaissances générales du domaine.

## Revendications

1. Système transactionnel sécurisé en P2P, comprenant un ensemble de nœuds (WN) communiquant par des messages (WM), chaque message comprenant des données à traiter par un programme (WP) ainsi que le haché du programme devant être utilisé au niveau du nœud destinataire sur les données d'entrée contenues dans ce message, chaque nœud étant apte, lors de la réception d'un message, et en utilisant le haché contenu dans ce message, à provoquer l'exécution du programme devant être utilisé sur les données d'entrée contenues dans ledit message reçu, ce programme générant un message de sortie contenant des données de sortie générées par le programme et le haché du programme, système **caractérisé en ce qu'**au moins certains programmes sont aptes à être exécutés dans un mode avec preuve à connaissance nulle (ZKP) et à inclure dans des messages de sortie une information de preuve d'exécution à connaissance nulle pour vérification par le nœud destinataire, **en ce qu'**au moins certains nœuds comprennent une unité de gestion cryptographique de mémoire sécurisée (CMMU) apte à recevoir les messages et à déléguer l'exécution du programme à un processeur non sécurisé, **en ce que** ledit processeur est apte à exécuter le programme avec génération d'une preuve d'exécution à connaissance nulle, et **en ce que** l'unité CMMU est apte à recevoir la preuve d'exécution à connaissance nulle dudit processeur non sécurisé, à vérifier ladite preuve et à l'inclure dans un message émis contenant par ailleurs les données (data2) générées par le processeur non sécurisé.

2. Système selon la revendication 1, dans lequel le processeur non sécurisé est apte à générer ladite preuve prenant comme entrée privée au moins les données d'entrée (data1) et comme entrée publique au moins les données générées (data2), l'unité CMMU étant apte à vérifier ladite preuve en prenant comme entrée publique au moins les données générées (data2).

3. Système selon la revendication 1, dans lequel d'autres nœuds sont aptes à exécuter les programmes de façon en soi non sécurisée, dans lequel chaque message reçu (WM1) au niveau d'un tel nœud contient une preuve à connaissance nulle (ZKP1) du fait que les données (data1) contenues dans ce message ont été générées par un programme correspondant au haché (#WP) contenu dans ledit message reçu, et dans lequel tout programme destiné à traiter un tel message comprend un sous-programme de vérification de la preuve contenue dans le message reçu, un sous-programme de traitement des données (data1) contenues dans le message reçu pour générer des données traitées (data2), et un sous-programme de génération d'une preuve à connaissance nulle (ZKP2) de l'exécution du programme correspondant effectivement au haché et générant les données traitées (data2).

4. Système selon la revendication 3, dans lequel ledit sous-programme de génération d'une preuve à connaissance nulle reçoit comme entrée publique les données (data2) générées par le sous-programme de traitement.

5. Système selon l'une des revendications 3 et 4, lequel comprend en outre un mécanisme à nœuds miroirs apte à répliquer les traitements par un même programme sur un message donné sur une pluralité de nœuds formant miroirs, et à vérifier la cohérence des messages de sorties générés par ces traitements répliqués.

6. Système selon l'une des revendications 1 à 5, dans lequel les programmes désignés par leur haché comprennent des instructions de transaction sur des unités de valeur.

## Patentansprüche

1. Sicheres P2P-Transaktionssystem, umfassend eine Anordnung von Knoten (WN), die durch Nachrichten (WM) kommunizieren, jede Nachricht umfassend Daten, die durch ein Programm (WP) zu verarbeiten sind, sowie den Hash des Programms, das an dem Zielknoten auf die Eingabedaten anzuwenden ist, die in dieser Nachricht enthalten sind, wobei jeder Knoten geeignet ist, um bei dem Empfangen einer Nachricht und unter Verwendung des Hash, der in dieser Nachricht enthalten ist, die Ausführung des Programms zu veranlassen, das auf die Eingabedaten anzuwenden ist, die in der empfangenen Nachricht enthalten sind, wobei dieses Programm eine Ausgabenachricht erzeugt, die Ausgabedaten, die durch das Programm erzeugt werden, und den Hash des Programms enthält, wobei das System **dadurch gekennzeichnet ist, dass** mindestens gewisse Programme geeignet sind, um in einem Modus mit Null-Wissen-Beweis (ZKP) ausgeführt zu werden und um in Ausgabenachrichten Null-Wissen-Ausführungsbeweisinformationen zum Prüfen durch den Zielknoten einzuschließen, dass mindestens gewisse Knoten eine Einheit einer kryptografischen Verwaltung eines sicheren Speichers (CMMU) umfassen, die geeignet ist, um die Nachrichten zu empfangen und um die Ausführung des Programms an einen nicht sicheren Prozessor zu delegieren, dass der Prozessor geeignet ist, um das Programm mit einer Erzeugung eines Null-Wissen-Ausführungsbeweises auszuführen, und dass die CMMU-Einheit geeignet ist, um den Null-Wissen-Ausführungsbeweis von dem nicht sicheren Prozessor zu empfangen, um den Beweis zu prüfen und um ihn in eine übertragene Nachricht einzuschließen, die außerdem die Daten (data2) enthält, die durch den nicht sicheren Prozessor erzeugt werden.

2. System nach Anspruch 1, wobei der nicht sichere Prozessor geeignet ist, um den Beweis zu erzeugen, der als private Eingabe mindestens die Eingabedaten (data1) und als öffentliche Eingabe mindestens die erzeugten Daten (data2) nimmt, wobei die CMMU-Einheit geeignet ist, um den Beweis zu prüfen, indem sie als öffentliche Eingabe mindestens die erzeugten Daten (data2) nimmt.

3. System nach Anspruch 1, wobei andere Knoten geeignet sind, um die Programme auf an sich nicht sichere Weise auszuführen, wobei jede Nachricht (WM1), die an einem solchen Knoten empfangen wird, einen Null-Wissen-Beweis (ZKP1) der Tatsache enthält, dass die Daten (data1), die in dieser Nachricht enthalten sind, durch ein Programm erzeugt wurden, das dem Hash (#WP) entspricht, der in der empfangenen Nachricht enthalten ist, und wobei jedes Programm, das dafür bestimmt ist, eine solche Nachricht zu verarbeiten, ein Prüfteilprogramm des Beweises, der in der empfangenen Nachricht enthalten ist, ein Verarbeitungsteilprogramm der Daten (data1), die in der empfangenen Nachricht enthalten sind, zum Erzeugen der verarbeiteten Daten (data2), und ein Erzeugungsteilprogramm eines Null-Wissen-Beweises (ZKP2) der Ausführung des Programms umfasst, das tatsächlich dem Hash entspricht und die verarbeiteten Daten (data2) erzeugt.

4. System nach Anspruch 3, wobei das Erzeugungsteilprogramm eines Null-Wissen-Beweises als öffentliche Eingabe die Daten (data2) empfängt, die durch das Verarbeitungsteilprogramm erzeugt werden.

5. System nach einem der Ansprüche 3 und 4, das ferner einen Mechanismus mit Spiegelknoten umfasst, der geeignet ist, um die Verarbeitungen durch ein gleiches Programm auf einer gegebenen Nachricht auf einer Vielzahl von Knoten zu replizieren, die Spiegel ausbilden, und um die Kohärenz der Ausgabenachrichten zu prüfen, die durch diese replizierten Verarbeitungen erzeugt werden.

6. System nach einem der Ansprüche 1 bis 5, wobei die Programme, die durch ihren Hash bezeichnet sind, Transaktionsanweisungen auf Werteinheiten umfassen.

## Claims

1. Secure transactional system in P2P, comprising a set of nodes (WN) communicating by messages (WM), each message comprising data to be processed by a program (WP) as well as the hash of the program to be used at the destination node on the input data contained in this message, each node being capable, upon receiving a message and by using the hash contained in this message, of causing the execution of the program to be used on the input data contained in said received message, this program generating an output message containing output data generated by the program and the hash of the program, said system being **characterized in that** at least certain programs are capable of being executed in a zero-knowledge proof mode (ZKP) and of including in output messages a zero-knowledge execution proof information for verification by the destination node, **in that** at least some nodes comprise a crypto memory management unit (CMMU) capable of receiving the messages and of delegating the execution of the program to a non-secure processor, **in that** said processor is capable of executing the program while generating a zero-knowledge execution proof, and **in that** the CMMU unit is capable of receiving the zero-knowledge execution proof from said non-secure processor, of verifying said proof, and of including it in an output message further containing the data (data2) generated by the non-secure processor.

2. System according to claim 1, wherein the non-secure processor is capable of generating said proof by taking as a private input, at least the input data (data1), and as a public input, at least the generated data (data2), the CMMU unit being capable of verifying said proof by taking as public input, at least the generated data (data2).

3. System according to claim 1, wherein other nodes are capable of executing the programs in a manner non-secured per se, wherein each message (WM1) received at such node contains a zero-knowledge proof (ZKP1) of the fact that the data (data1) contained in said message have been generated by a program corresponding to the hash (#WP) contained in said received message, and wherein any program intended to process such message comprises a sub-program for verifying the proof contained in the received message, a sub-program for processing the data (data1) contained in the received message for generating the processed data (data2), and a sub-program for generating a zero-knowledge proof (ZKP2) of the execution of the program effectively corresponding to the hash and generating the processed data (data2).

4. System according to claim 3, wherein said sub-program for generating a zero-knowledge proof receives as a public input the data (data2) generated by the processing sub-program.

5. System according to one of claims 4 and 5, further comprising a mirror node mechanism capable of replicating the processings by a same program on a given message on a plurality of nodes that form mirrors, and of verifying the consistency of the output messages generated by these replicated processings.

6. System according to any of claims 1 to 5, wherein the programs designated by their hash comprise transaction instructions on value units.
